# EUROPEAN PATENT APPLICATION

(11) **EP 4 653 801 A1**
(43) Date of publication of application: **26.11.2025**
(21) Application number: 25177777.7
(22) Date of filing: 20.05.2025
(51) Int. Cl.: G01B 3/28

(54) **DEVICE FOR MEASURING THE REMOVAL DEPTH OF MATERIAL FROM AN OBJECT**

(30) Priority: 21.05.2024 IT 202400011509
(71) Applicant: Mole Moreschi S.r.l., 40068 San Lazzaro di Savena (BO) (IT)
(72) Inventor: MORESCHI, MARCO, 40068 SAN LAZZARO DI SAVENA (BO) (IT)
(74) Representative: Negrini, Elena

(57) **Abstract**

A device for measuring the removal depth of material from an object (J) comprises a measuring means (3) provided with a measuring probe (5) assigned to match with the object (J), and a support (7) to which the measuring means (3) is connected.

The support (7) comprises a reference portion (17), carrying a first contact portion (11) and a second contact portion (13) mutually spaced apart and each assigned to match with the object (J), and a support arm (9), connected to the reference portion (17) and provided with a constraint seat (15) for the adjustable fixing of the measuring means (3).

## Description

The present invention falls within the field of precision abrasion processes for the removal of material from objects, and in particular it refers to a device for measuring the removal depth of material from an object.

Devices for measuring the removal depth of material from an object are known, for example for measuring the depth of grinding, filing, abrasion, planing or other surface processing of plates, disks or other objects made of glass, ceramic, stone, wood or other materials, and more specifically of their edge. The processing procedure is usually performed by repeating a series of removals of material from the surface of the object to be ground, alternating with an equal number of measurements of the removal depth achieved, until the desired value for that depth is reached.

The known measuring devices used for this purpose are callipers, micrometers or meters to measure the size reached by the object following each grinding step, obtaining the value of the removal depth as the difference between the original dimensions and those following the processing, or they are so-called comparators, which are anchored to a fixed reference with respect to the object and calibrated on the starting value and directly measure the removal depth reached.

A disadvantage of known measuring devices is that they do not allow for precise and reproducible measurements, being highly dependent on the skill and experience of the operator who carries out the measurement, and on other random factors which the known measuring devices are affected by.

Another disadvantage of the known measuring devices is that each of them is suitable for making measurements only on objects of a predetermined shape, preferably rectilinear. In fact, a caliper or a comparator allow you to measure, for example, the width of a rectangular plate whose edge is being ground, or its height, but in the case of a circular plate it would be essential to know the exact center of the plate itself to correctly measure the depth reached by the removal of the edge.

A further disadvantage consists in the fact that to carry out measurements using a depth comparator, this must be firmly fixed to a support that acts as a fixed reference, and the object to be measured must be, for each measurement, placed in an identical and predetermined position with respect to this support for the measurement to be carried out correctly. This makes the measurement process laborious and inconvenient, as well as difficult to repeat.

Prior art documents No. US95288100 B1, No. GB595320A and No. CN113043168A and No. US2019/094002A1 disclose the preamble of claim 1 of the present invention.

An object of the present invention is to propose a device for measuring the removal depth of material from an object that is applicable and allows measuring the removal depth achieved on objects of various sizes and shapes, even circular, with high accuracy and reproducibility.

Another object of the present invention is to propose a measuring device of simple construction and use.

The characteristics of the invention are highlighted below with particular reference to the attached drawings in which:
- figure 1 illustrates a front view of a first embodiment of the device for measuring the removal depth of material from an object which is matter of the present invention, applied to a circular disk for measuring the removal depth of material from the edge of the latter;
- figure 2 illustrates a front view of a variant of the device of figure 1;
- figure 3 illustrates a side view of the device of figure 2;
- figure 4 illustrates an axonometric view of the device of figure 2;
- figures 5 and 6 illustrate front views of a second embodiment of the measuring device object of the present invention, applied to a circular disk for measuring the removal depth of material from the edge of the latter, respectively in a calibration phase of the device and in a measurement phase of the removal depth of the edge of the disk;
- figure 7 illustrates a front view of the device of figure 5 applied in measuring the removal depth of material from a straight edge of an object;
- figure 8 illustrates a front view of the device of figure 5 applied in measuring the removal depth of material from a circular concave edge of an object.

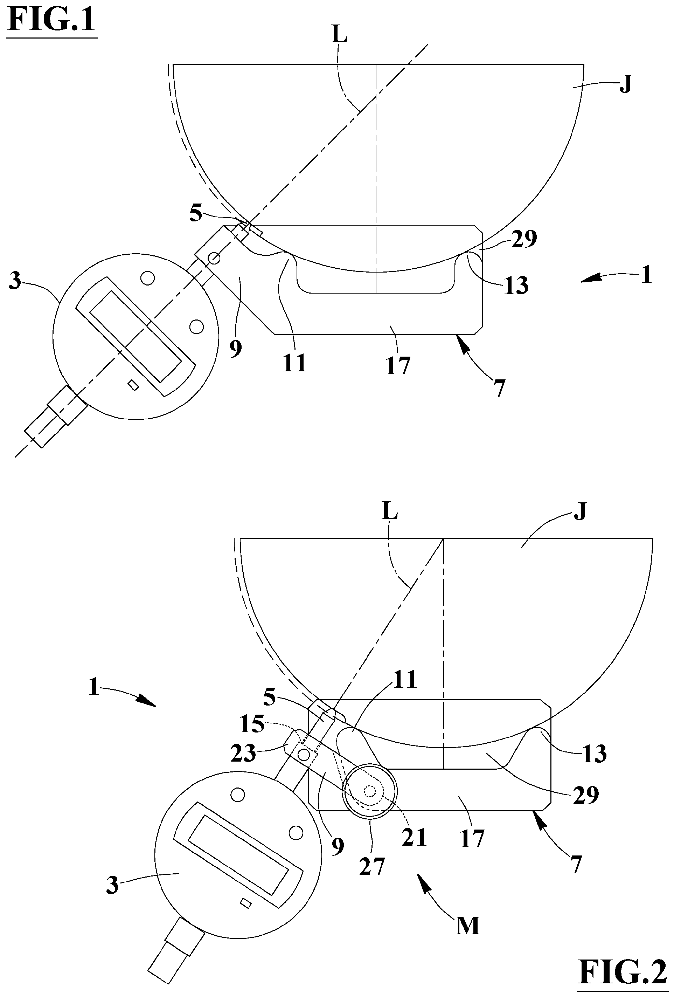

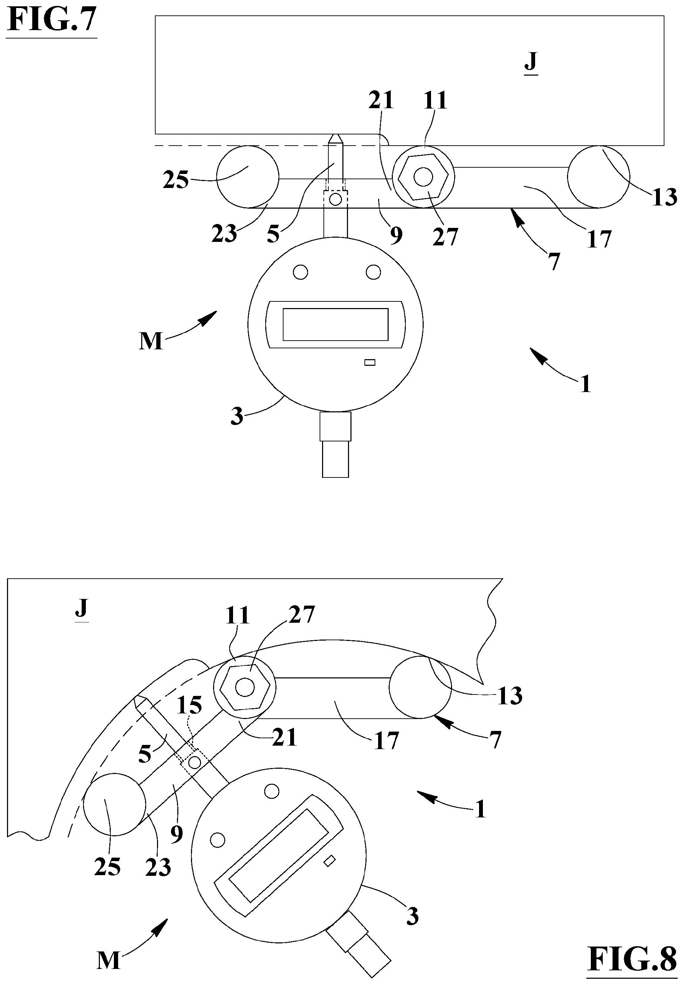

With reference to figures 1-8, numeral 1 refers to the device for measuring the removal depth of material from an object J, mater of the present invention.

The object J may be, by way of example and not limited to, a plate, tile, disk, lens, panel, block or similar, in one or more materials such as glass, ceramic, stone, wood, plastic, metal, or similar.

In the context of this document, the expression "material removal" generally indicates a process aimed at removing a part of material from the surface of the object J to reduce a dimension, for example by grinding, filing, abrasion, planing or other surface processing, with particular reference to the perimeter edge of the object J itself to reduce its width, thickness or diameter.

In correspondence with such removal processes, once the initial dimension to be reduced is known, it is of fundamental importance to know precisely the removal depth reached at each repetition or "pass" of the process, so as to be able to stop the process once a predetermined depth of material removed from the object J has been measured.

By way of example, to produce a discoid glass tray with a diameter of 500 mm by grinding the edge of a circular disk with an initial diameter of 505 mm, it is necessary to measure that the removal depth of material from the edge, during one or more repetitions of the grinding, reaches a total of 5 mm.

In its preferred embodiment, illustrated in particular in figure 1, the device 1 comprises a measuring means 3 and a support 7, to which the measuring means 3 is constrained.

The measuring means 3 is a measuring instrument preferably of the so-called comparator type, mechanical or electronic, provided with a measuring probe 5 assigned to contact the surface to be removed from the object J.

The measuring probe 5 is elongated in shape and extends from a body of the measuring means 3, being constrained to this by means of a guide along which the measuring probe 5 is elastically slidable; the direction of the longitudinal development and sliding of the measuring probe 5 is illustrated in the figures by the dot dashed translation line L. The free end of the measuring probe 5 typically ends with a conical, semi-spherical tip or with a rotatable sphere, to contact with the object J.

The measurement of the longitudinal deviation of the measuring probe 5 with respect to a zero position, possibly following mechanical and/or electronic amplification, is indicated by means of display of the measuring means 3 such as a cursor movable along a graduated index or a digital display.

The support 7 comprises:
- a reference portion 17, carrying a first contact portion 11 and a second contact portion 13 mutually spaced from each other and each assigned to contact the object J, more precisely to contact with the edge or other surface to be worked of the object J;
- a support arm 9, connected to the reference portion 17 and provided with a constraint seat 15 for the adjustable fixing of the measuring means 3 to the support 7.

The reference portion 17 is for example a base or an elongated bar at the ends of which are arranged the first contact portion 11 and the second contact portion 13, which protrude with respect to the reference portion 17 by extending from the same side of this.

Preferably, the first contact portion 11 and the second contact portion 13 are cylindrical, spherical, with a cylindrical or spherical sector, conical, ogival, or with another convex or rounded shape assigned to contact the object J. Such a type of shape means that each contact portion 11, 13 contacts the object J at a respective precise point, or that the object J is tangent at a point to each contact portion 11, 13.

Optionally, the reference portion 17 can have gripping means, for example a handle fixed to it, to allow an operator of the device 1 to have an easier grip on it.

A variant of the device 1 provides that the support 7 also comprises a flat bracket 29 associated with the reference portion 17 extending along a parallel plane and spaced from a plane passing through the measuring probe 5 and the first contact portion 11 and the second contact portion 13. This bracket 29 therefore extends from the reference portion 17 in the same direction as the first contact portion 11 and the second contact portion 13 and protrudes at least beyond these, and possibly also beyond the support arm 9 and the measuring probe 5. In this way the bracket 29 acts as a support for the device 1 on the object J, particularly useful for keeping the device 1 stably associated with an object J of the plate or disk type from which it is assigned to remove material from the edge: in fact, the bracket 29 lies parallel to contact with a main face of such an object J, while the first contact portion 11 and the second contact portion 13 are easily positioned in contact with said edge.

The support arm 9 is elongated and preferably extends from one end of the reference portion 17. With reference to the attached figures, by way of example, the support arm 9 is fixed to the end of the reference portion 17 at which the first contact portion 11 is located and extends linearly at a predetermined angle between 90°-360°, more preferably between 90°-180°, measured with respect to the longitudinal development of the reference portion 17.

Preferably, the support arm 9 is in a single body with the remaining part of the support 7, i.e. with the reference portion 17, or alternatively it is welded or otherwise rigidly fixed to the support 7 with a predetermined orientation.

The constraint seat 15 constitutes an attachment suitable for locking the measuring means 3 to the support arm 9 in an adjustable position with respect to the latter and therefore can vary depending on the shape of the specific measuring means 3 used. In the preferred embodiment, when the measuring means 3 is a comparator as described above, the constraint seat 15 is preferably a through hole that passes through the support arm 9 of a complementary diameter, i.e. equal to or slightly greater than, the diameter of the guide for the measuring probe 5; in this way, said guide is inserted into the constraint seat 15 and is blocked therein by means of a screw, a set screw or other similar locking means transverse to the constraint seat 15 itself.

In a calibration condition or phase T of the device 1, the guide of the measuring means 3 is inserted into the constraint seat 15, adjusting its position so that the tip of the measuring probe 5 is in contact with the surface to be removed of the object J and the measuring means 3 gives a zero reading. In correspondence with this calibration condition T, the device 1 is calibrated and the measuring means 3 is rigidly blocked to the constraint seat 15 in the corresponding position by means of the locking means.

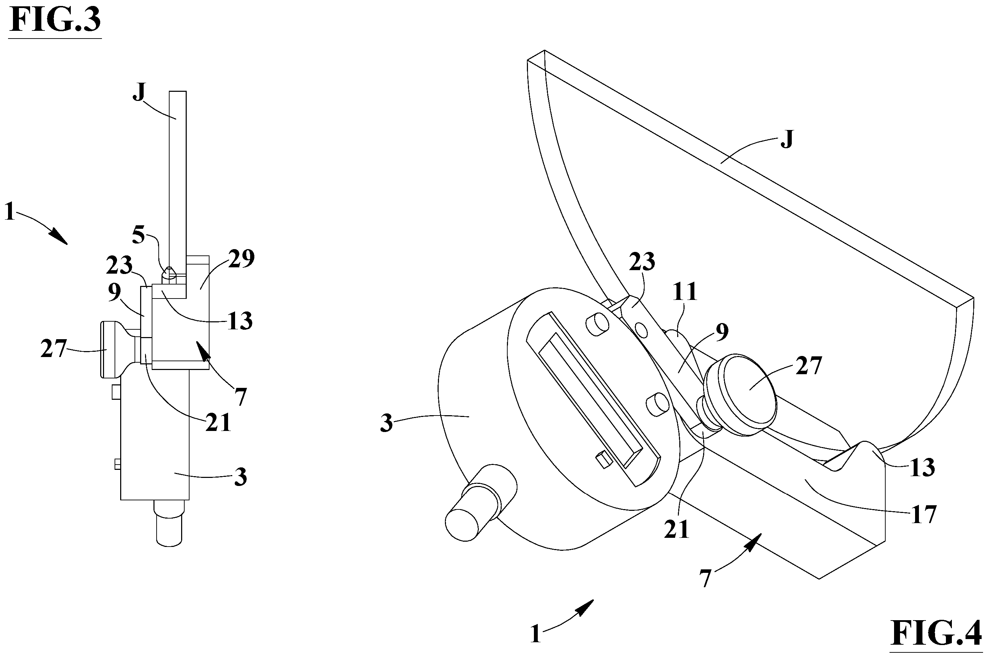

Once the measuring means 3 is locked to the support 7, the measuring probe 5 is spaced from, or does not coincide with, the first contact portion 11 and the second contact portion 13, in a position external to the bundle of geometric planes perpendicular to the geometric segment joining the first contact portion 11 and the second contact portion 13 and comprised between them. The measuring probe 5 is also almost coplanar with the first contact portion 11 and the second contact portion 13, as illustrated in particular in figure 3, so as to allow measurement along the edges of objects J even very thin, with a thickness of the order of a millimetre or even less.

In the present embodiment, the geometric and dimensional relationships and ratio between the first contact portion 11 and the second contact portion 13, the reference portion 17, the support arm 9 with the respective constraint seat 15, and the measuring probe 5 determine or fix the set of shapes and dimensions of the objects J to which a given device 1 can be applied for measurement.

More specifically, a given device 1 is generally applicable for measuring the removal of material from a straight edge of an object J, provided that:
- the distance between the second contact portion 13 and the tip of the measuring probe 5 is less than the length of said straight edge, so that both the contact portions 11, 13 and the measuring probe 5 can simultaneously detect the edge;
- the translation line L is almost perpendicular to the geometric segment that joins the contact portions 11, 13 and is tangent to them, and therefore is perpendicular to the edge whose removal depth is to be measured and to which the device 1 is applied for this purpose.

Similarly, a given device 1 is generally applicable for measuring the removal of material from an edge of a circular or arc-shaped object J, provided that:
- the protrusion of the first contact portion 11 and of the second contact portion 13 with respect to the reference portion 17 is such that, when the device 1 is applied to the object J, the latter is tangent to the contact portions 11, 13 but not to the reference portion: this is verified for example for objects J whose edge has a radius of curvature greater than the distance between the points of tangency with the first contact portion 11 and the second contact portion 13;
- the development of the support arm 9 and the orientation of the constraint seat 15 are such that, when the device 1 is applied to the object J, the translation line L is oriented almost perpendicularly with respect to the edge itself, that is radially with respect to the circular curvature of the same.

The measurement provided by a given device 1 will be accurate only for objects J having a circular edge of a predetermined radius for which the translation line L passes through the center of the corresponding circumference. In any case, the bisector of the geometric segment that joins the first contact portion 11 and the second contact portion 13 will be directed towards the center of curvature of said circular edge.

As the translation line L moves away from perfect perpendicularity with respect to the rectilinear edge or with respect to the circular edge, the measurement will be affected by an increasing parallax error, which however remains negligible for deviations below a certain threshold.

Naturally, the device 1 is also applicable to objects J with edges or surfaces to be removed of more complex shapes, such as broken lines or curves, provided that the conditions just mentioned are at least locally satisfied and within the limits of the construction tolerances and the negligibility of any misalignments.

In order to make the device 1 suitable for performing correct measurements on objects J with circular edges of different radii, a variant of the device 1, not illustrated, provides that the constraint seat consists of an attachment, such as a cylindrical channel or a snap-fit base, hinged on the surface of the support arm 9. The measuring means 3, fixed for example by inserting the guide of the measuring probe 5 into said channel or by snapping an element complementary to the base, can be rotated to orient the translation line L of the measuring probe 5 in the direction of the center of the curvature of the object J, whatever the radius of such curvature.

The operation of the device 1 provides:
- to apply or to associate the device 1 with the first contact portion 11 and the second contact portion 13 resting against the surface to be removed of the object J;
- in the calibration condition T, to calibrate the measuring means 3 by adjusting and fixing its position in the constraint seat 15 so that the measuring probe 5 is in contact with the surface to be removed and the reading of the measuring means 3 is zeroed;
- to perform a phase or "pass" of the required processing by removing material from a section of the surface to be removed, without removing material from a reference section of length equal to or greater than the distance between the contact portions 11, 13;
- to place the device 1 in contact with the object J again, with the contact portions 11, 13 in contact with said reference section not involved in the previous removal phase, and with the translation line L of the measuring probe 5 pointing towards the removed section, carrying out a measurement condition M;
- in the measurement condition M, to bring the measuring probe 5 in contact with the surface of the removed section of the object J, obtaining the measurement of the removal depth relating to said removal phase.

Before each repetition of the removal process, or once the desired final removal depth has been measured, it is then possible to also remove the material at the reference section to the same depth.

In a second embodiment of the device 1, illustrated in particular in figures 2-4, the support arm 9 has a connection end portion 21 that is rotatably constrained to the reference portion 17 and an opposite free end portion 23 carrying the constraint seat 15. In this way the support arm 9 can be oriented in an adjustable position with respect to the reference portion 17.

Preferably the support arm 9 is pivoted near or at one end of the reference portion 17; for example and as illustrated, it is pivoted at the end carrying the first contact portion 11 by means of a rotation pin fixed to the centre of the latter, the first contact portion 11 being provided with a cylindrical sector portion or wall.

Preferably, the rotatable constraint between the connection end portion 21 and one end of the reference portion 17 is carried out by means of an adjustment element 27 assigned for their mutual angular locking.

Such adjustment element 27, for example, comprises or consists of a pin rigidly fixed to the support arm 9 and rotatable with friction in a corresponding hole in the reference portion 17; a handle or knob fixed to the end of said pin or to the support arm 9 itself allows easy adjustment of the orientation of the latter.

As a further example, the adjustment element 27 consists of a screw-bolt pair, where the screw passes through the thickness of the support arm 9 and the reference portion 17; by loosening the screw with respect to the bolt, the support arm 9 is movable and adjustable; by tightening the screw to the bolt, these press the support arm 9 and the reference portion 17 against each other, keeping them mutually blocked according to the desired angular orientation.

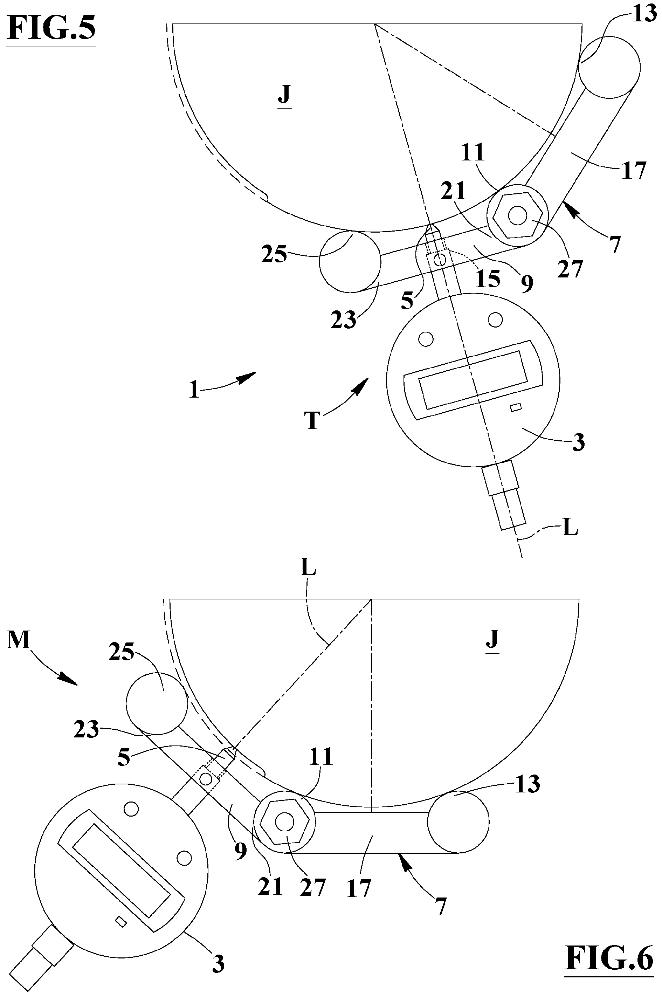

With particular reference to figures 5-8, a third embodiment of the device 1, further object of the present invention, provides that the support arm 9 has a connection end portion 21 rotatably constrained to the reference portion 17 from the side or at the end carrying the first contact portion 11, and has an opposite free end portion 23 carrying a third contact portion 25 assigned to contact the object J at least in the calibration condition T. Also in this case, an adjustment element 27 is preferably provided for the rotatably constraint between the connection end portion 21 and the reference portion 17, which allows the support arm 9 to be oriented and locked in a desired position.

The constraint seat 15 is obtained, arranged or fixed to the support arm 9 with a position and orientation such as to position the measuring probe 5 at the median point and perpendicular to the geometric segment joining the first contact portion 11 and the third contact portion 25. This geometric segment can be identified, for example, in the segment between the tangent points of a straight line with the first contact portion 11 and the third contact portion 25; the measuring probe 5, and therefore the translation line L, are perpendicular to that segment and pass through its median point. In this way, the measuring probe 5 will always be perpendicular to the edge of the object J on which the measurement is to be carried out, whether it is linear or curved within the geometric limits already highlighted, and the measurement will not be affected by misalignment or parallax errors.

A variant of the device 1 in its embodiments with support arm 9 rotating with respect to the reference portion 17 also provides a goniometer means associated with the adjustment element 27 and assigned to indicate the measurement of the angular position of the support arm 9 with respect to the reference portion 17. This goniometer means, for example, comprises a graduated circular or arc-shaped scale fixed or impressed on the surface of the reference portion 17 and extended around the connection end portion 21 of the support arm 9; an index movable along the graduated scale is rigidly fixed to the connection end portion 21. The indicated angle preferably corresponds to the angle between the geometric segment joining the first contact portion 11 and the second contact portion 13 and the translation line L.

Object of the present invention is also a method of measuring the removal depth of material from an object J, performed using the measuring device 1 described above. The method essentially comprises the steps of:
- associating or applying the device 1 to the object J, positioning the first contact portion 11 and the second contact portion 13 in contact with the surface to be removed from the object J;
- calibrating the measuring means 3 by adjusting and fixing its position in the respective constraint seat 15 so that the measuring probe 5, with zero reading, is in contact with the surface to be removed from the object J, in correspondence with the calibration condition T;
- following a removal of material, or after one or more steps of the required processing, from a section of the surface to be removed (which is illustrated in the figures by a dotted line), to arrange the device 1 again with the first contact portion 11 and the second contact portion 13 in contact with the surface to be removed of the object J in a section of such not affected by said removal, and with the measuring probe 5, or with the translation line L, which points in the direction or in correspondence with the removed surface of the object J, preferably with perpendicular incidence, carring out the measurement condition M;
- in the measurement condition M, measuring the removal depth by bringing the measuring probe 5 into contact with the removed surface of the object J.

In particular, in the case of devices 1 provided with a support arm 9 adjustable with respect to the reference portion 17, the calibration phase also and preferably provides for orienting and blocking the measuring probe 5 perpendicularly to the surface to be removed of the object J. For example, in the case in which the surface to be removed consists of a curvilinear or circular edge of the object J, the measuring probe 5 is oriented and blocked towards the center of the curvature of the edge, i.e. perpendicularly to the edge.

Furthermore, in the case in which the device 1 is provided with the third contact portion 25, the calibration phase also and preferably provides for placing said third contact portion 25 in contact with the surface to be removed of the object J; when all the first 11, second 13 and third 25 contact portions are in contact with the surface to be removed, placing or adjusting the measuring means 3 in a position such that the measuring probe 5 provides a zeroing of the reading and is in contact with said surface to be removed, preferably with perpendicular incidence; then locking the position of the measuring means 3 in the constraint seat 15 and the angular position of the support arm 9 with respect to the reference portion 17.

## Claims

1. Device for measuring the removal depth of material from an object (J), comprising a measuring means (3) provided with a measuring probe (5) assigned to match with the object (J), and a support (7) to which the measuring means (3) is connected; the device (1) being **characterized in that** the support (7) comprises a reference portion (17), carrying a first contact portion (11) and a second contact portion (13) mutually spaced apart and each assigned to match with the object (J), and a support arm (9), connected to the reference portion (17) and provided with a constraint seat (15) for the adjustable fixing of the measuring means (3).

2. Device according to claim 1 **characterized in that** the measuring probe (5) has an elongated shape, and is spaced and almost coplanar with the first (11) and second (13) contact portions and external to the bundle of planes perpendicular to the geometric segment joining the first (11) and second (13) contact portions and comprised between them.

3. Device according to claim 1 or 2 **characterized in that** the support arm (9) is rigidly fixed or is in a single body with the remaining part of the support (7).

4. Device according to claim 1 or 2 **characterized in that** the support arm (9) has a connection end portion (21) rotatably constrained to the reference portion (17) and an opposite free end portion (23) carrying the constraint seat (15).

5. Device according to claim 1 or 2 **characterized in that** the support arm (9) has an connection end portion (21), rotatably constrained to the reference portion (17) on the side of the first contact portion (11), and an opposite free end portion (23), carrying a third contact portion (25) assigned to match with the object (J) at least in a calibration condition (T) of the device (1), with the constraint seat (15) arranged so as to position the measuring probe (5) at the midpoint and perpendicular to the geometric segment joining the first (11) and third (25) contact portions.

6. Device according to claim 4 or 5 **characterized in that** the rotatable constraint between the connection end portion (21) and the reference portion (17) is achieved by means of an adjustment element (27) assigned for their mutual angular locking.

7. Device according to claim 6 **characterized in that** it further comprises a goniometer means associated with the adjustment element (27) assigned to indicate the measurement of the angular position of the support arm (9) with respect to the reference portion (17).

8. Device according to any one of the preceding claims **characterized in that** the contact portions are cylindrical, spherical, cylindrical or spherical sector, conical, ogival, or with another convex shape assigned for contact with the object (J).

9. Device according to any one of the preceding claims **characterized in that** the support (7) includes a bracket (29) associated with the reference portion (17) developing along a plane parallel and spaced from a plane passing through the measuring probe (5) and the first (11) and second (13) contact portions, and extending beyond at least the first (11) and second (13) contact portions.

10. Method of measuring the depth of material removal from an object (J) using the measuring device (1) of any one of the preceding claims **characterized in** comprising the phases of:
- associating the device (1) with the object (J) by positioning the first (11) and second (13) contact portions to match the surface to be removed of the object (J);
- calibrating the measuring means (3) by adjusting its position in the respective constraint seat (15) so that the measuring probe (5), with zero reading, is in contact with the surface to be removed of the object (J);
- arranging the device (1) with the first (11) and second (13) contact portions in contact with the surface to be removed of the object (J) and with the measuring probe (5) in correspondence with the removed surface of the object (J);
- measuring the removal depth by bringing the measuring probe (5) in contact with the removed surface of the object (J).

11. Method according to claim 10 **characterized in that** it includes the phases of:
- during the calibration phase, orienting and blocking the measuring probe (5) perpendicular to the surface to be removed;
- in the case of device (1) provided with the third contact portion (25), during the calibration phase placing also the third contact portion (25) in contact with the surface to be removed of the object (J) and blocking the position of the measuring means (3) in the constraint seat (15) and the angular position of the support arm (9).
